# EUROPÄISCHE PATENTSCHRIFT

(11) **EP 0 443 375 B1**
(45) Veröffentlichungstag und Bekanntmachung des Hinweises auf die Patenterteilung: **05.07.1995**
(21) Anmeldenummer: 91101713.5
(22) Anmeldetag: 07.02.1991
(51) Int. Cl.: H05K 5/02, H05K 7/18, H02B 1/00

(54) **Lösbarer Spannverschluss einer Schaltschrank-Versteifungsvorrichtung**
Detachable strain locking for a switch cabinet stiffening arrangement
Serrure de serrage amovible pour un arrangement de renforcement pour des armoires de manoeuvre

(30) Priorität: 20.02.1990 DE 9001997 U
(43) Veröffentlichungstag der Anmeldung: 28.08.1991
(73) Patentinhaber: SIEMENS AKTIENGESELLSCHAFT, 80333 München (DE)
(72) Erfinder: Latussek, Hans-Peter, Dipl.-Ing., W-8501 Feucht (DE)

(56) Entgegenhaltungen:
- EP-A- 0 298 305
- DE-A- 2 736 163
- DE-U- 8 101 241
- RICHTER-V. VOSS: "BAUELEMENTE DER FEINMECHANIK" 4. Auflage, Seiten 238,239,1949, Verlag Technik GmbH, Berlin

## Beschreibung

Die Erfindung betrifft einen lösbaren Spannverschluß einer Schaltschrank-Versteifungsvorrichtung, die aus zwei Winkelstreben besteht und im Spannzustand X-förmig in einer Ebene verläuft, wobei der Spannverschluß einen Spannbolzen aufweist, der mit seinem einen Ende an einer der Winkelstreben befestigt ist und am anderen Ende eine Querbohrung aufweist an welcher über eine Steckachse ein Spannblock mit Spannhebel befestigt ist. Ein solcher Spannverschluß ist beispielsweise aus dem DE-GM 81 01 241 bekannt. Aufgabe solcher Versteifungsvorrichtungen ist die Unterdrückung von durch ein Erdbeben erzeugten Schwingungen. Bei der beschriebenen Anordnung zum Verspannen der Versteifungsvorrichtung ist jedoch nachteilig, daß beim Öffnen des Spannverschlusses ein hohes Biegemoment auf den Spannbolzen einwirkt. Dieses Biegemoment führt zu Materialüberlastungen, so daß der Bolzen beim Öffnen oder bei anderweitiger Belastung, z.B. durch seismische Belastung brechen kann.

Aufgabe der Erfindung ist es, den oben genannten Nachteil zu vermeiden, wobei aus Kostengründen möglichst viele Teile aus oben beschriebenem Stand der Technik verwendet werden sollen. Insbesondere soll es möglich sein, eine gemäß dem DE-GM 81 01 241 ausgebildete Versteifungsvorrichtung mit dem erfindungsgemäßen Spannverschluß nachzurüsten.

Die Aufgabe wird dadurch gelöst, daß die Querbohrung senkrecht zu der im Spannzustand von der Versteifungsvorrichtung gebildeten Ebene verläuft, so daß Spannblock und Spannhebel in der im Spannzustand von der Versteifungsvorrichtung gebildeten Ebene verschwenkbar sind und im Spannzustand auf die andere Winkelstrebe einwirken. Durch diese Maßnahmen wird erreicht, daß beim Betätigen des Spannverschlusses im Spannbolzen nur noch Zugkräfte auftreten, so daß Materialüberlastungen durch das Biegemoment vermieden werden.

In einer vorteilhaften Ausgestaltung der Erfindung weist der Spannhebel in der Nähe des Spannblocks eine Abknickung auf, so daß zwischen der Winkelstrebe auf der Seite des Spannblocks und dem Spannhebel in beiden Hebelstellungen (AUF und ZU) noch ein Freiraum verbleibt, so daß der Spannhebel ohne Verletzungsgefahr betätigt werden kann.

Ferner ist mit Vorteil der Spannverschluß so gestaltet, daß zum Spannen des Spannverschlusses der Spannhebel nach unten bewegt wird. Dadurch wird verhindert, daß z.B. während einer seismischen Anregung der Spannverschluß geöffnet wird und so die Versteifungsvorrichtung wirkungslos gemacht wird.

Weitere Vorteile ergeben sich durch die Anordnung einer Unterlage zwischen dem Spannblock und dem Mittelteil der Winkelstrebe, da hierdurch der Anpreßdruck des Spannbolzens auf das Mittelteil der Winkelstrebe gleichmäßig und großflächig verteilt wird.

Zur Erläuterung der Erfindung wird im folgenden ein Ausführungsbeispiel näher beschrieben. Es zeigen:
- FIG 1: eine Ansicht der verspannten Versteifungsvorrichtung in einem Schaltschrank,
- FIG 2: einen Schnitt durch den Spannverschluß im gespannten Zustand, und
- FIG 3: eine Ansicht des Spannverschlusses im entspannten Zustand.

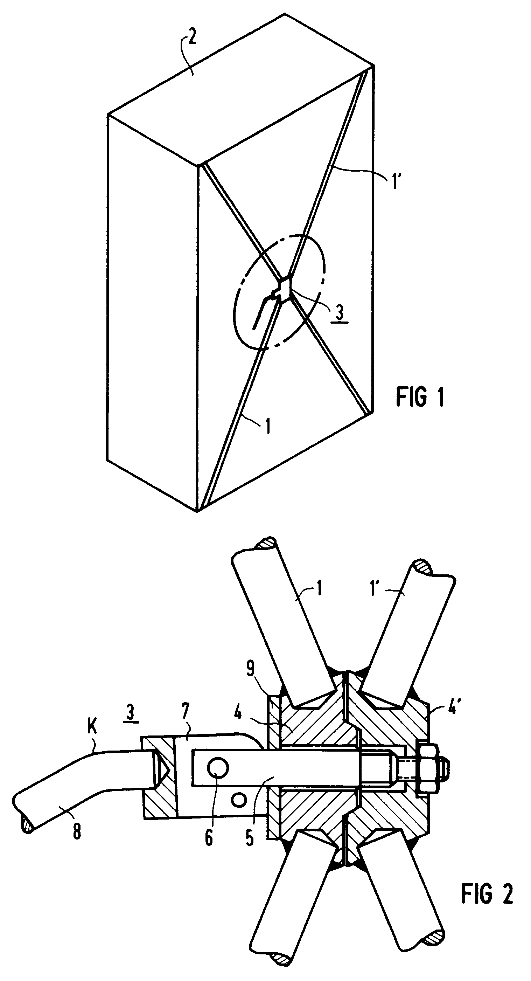

Zwei Winkelstreben 1, 1′ einer Versteifungsvorrichtung sind schwenkbar in einem Schaltschrank 2 lösbar befestigt. Die Winkelstreben 1, 1′ liegen dabei, wie in FIG 1 angedeutet, im gespannten Zustand X-förmig in einer Ebene.

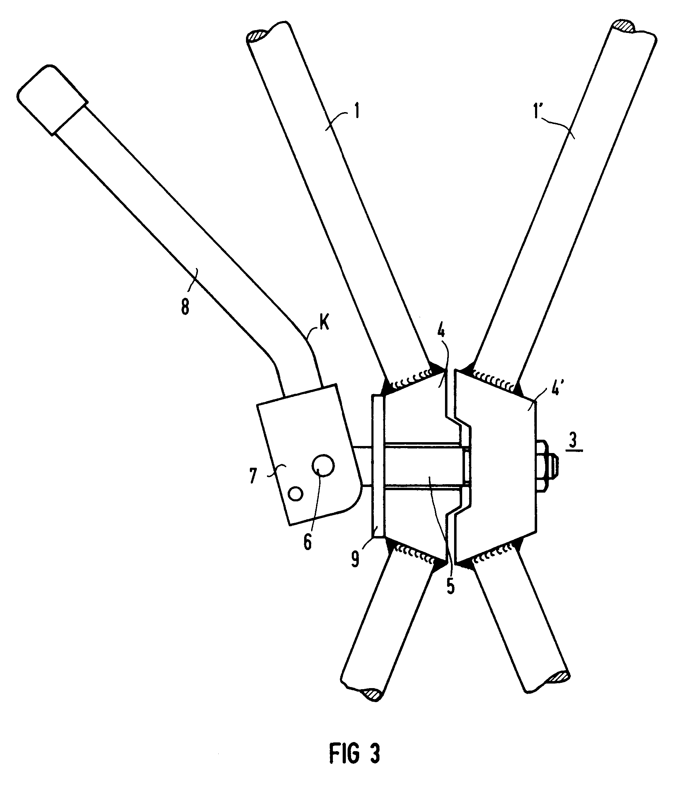

Die Figuren 2 und 3 zeigen den Aufbau des Spannverschlusses 3, der die beiden Mittelteile 4, 4′ der Winkelstreben 1, 1′ miteinander verbindet. Ein Spannbolzen 5 ist mit seinem einen Ende starr am Mittelteil 4′ der Winkelstrebe 1′ befestigt. In das Mittelteil 4 der anderen Winkelstrebe 1 ist eine Nut eingebracht, die den Spannbolzen 5 führt. Am anderen Ende des Spannbolzens 5 befindet sich eine Querbohrung 6, die senkrecht zu der im Spannzustand von der Versteifungsvorrichtung gebildeten Ebene verläuft und an der über eine Steckachse der Spannblock 7 befestigt ist. Vorteilhaft ist die Bohrung im Spannblock 7 für die Steckachse exzentrisch angeordnet, wie in FIG 2 und 3 angedeutet.

Durch Verschwenken des Spannhebels 8 in der im Spannzustand von der Versteifungsvorrichtung gebildeten Ebene wird der Spannverschluß 3 ge- bzw. entspannt. Vorteilhaft weist der Spannhebel 8 dabei eine Abknickung K derart auf, daß der Spannhebel 8 mit der Winkelstrebe 1 sowohl bei gespannten als auch bei gelöstem Spannverschluß 4 einen spitzen Winkel einschließt. Durch die Abknickung K ist es möglich, die für einen Spannverschluß gemäß des DE-GM 81 01 241 ausgebildeten Teile nahezu unverändert zu verwenden, man vermeidet also eine kostspielige Neuentwicklung.

Der Spannblock 7 sollte derart ausgebildet sein, daß der Spannverschluß 3 durch eine Bewegung des Spannhebels 8 nach unten gespannt wird, da dann herabfallende Gegenstände den Spannverschluß 3 nicht lösen können.

Eine zwischen Spannblock 7 und Mittelteil 4 der Winkelstrebe 1 angeordnete Unterlage 9 verteilt den Druck gleichmäßig auf das Mittelteil der Winkelstrebe 1, so daß auch ohne Veränderungen am Mittelteil 4 der Winkelstrebe 1 im Spannbolzen 5 keine Biegekräfte mehr auftreten.

## Patentansprüche

1. Lösbarer Spannverschluß einer Schaltschrank-Versteifungsvorrichtung, die aus zwei Winkelstreben besteht und im Spannzustand X-förmig in einer Ebene verläuft, wobei
der Spannverschluß einen Spannbolzen aufweist, der mit seinem einen Ende an einer der Winkelstreben befestigt ist und am anderen Ende eine Querbohrung aufweist, an welcher über eine Steckachse ein Spannblock mit Spannhebel befestigt ist,
dadurch gekennzeichnet, daß
die Querbohrung (6) senkrecht zu der im Spannzustand von der Versteifungsvorrichtung gebildeten Ebene verläuft, so daß Spannblock (7) und Spannhebel (8) in der im Spannzustand von der Versteifungsvorrichtung gebildeten Ebene verschwenkbar sind und im Spannzustand auf die andere Winkelstrebe einwirken.

2. Spannverschluß nach Anspruch 1, **dadurch gekennzeichnet**, daß der Spannhebel (8) in der Nähe des Spannblocks (7) eine Abknickung (K) aufweist.

3. Spannverschluß nach Anspruch 1 oder 2, **dadurch gekennzeichnet**, daß im Spannzustand der Spannhebel (8) schräg in Richtung des Bodens des Schaltschrankes (2) zeigt.

## Claims

1. A releasable strain lock of a switching cabinet reinforcing device which is formed by two angle struts and in its tensioned state extends in an X-shape in a plane, the strain lock comprising a tensioning bolt, which is secured at one end to one of the angle struts and at its other end comprises a transverse bore, to which a tensioning block with a tensioning lever is secured via a plug axle, characterised in that the transverse bore (6) extends perpendicular to the plane formed by the reinforcing device in its tensioned state, so that the tensioning block (7) and tensioning lever (8) are pivotable in the plane formed by the reinforcing device in its tensioned state and act upon the other angle strut in said tensioned state.

2. A strain lock according to claim 1, characterised in that the tensioning lever (8) comprises a bend (K) in the vicinity of the tensioning block (7).

3. A strain lock according to claim 1 or 2, characterised in that the tensioning lever (8) points at an angle towards the base of the switching cabinet (2) in the tensioned state.

## Revendications

1. Dispositif de fermeture amovible pour un dispositif de renforcement d'armoire de commande, qui est constitué par deux entretoises coudées et, à l'état serré, s'étend selon une disposition en X dans un plan, le dispositif de serrage possédant un boulon de serrage qui est fixé, par l'une de ses extrémités, sur l'une des entretoises coudées et possède, à son autre extrémité, un perçage transversal, sur lequel un bloc de serrage pourvu d'un levier de serrage est fixé par l'intermédiaire d'un axe d'enfichage, caractérisé en ce que le perçage transversal (6) est perpendiculaire au plan formé, à l'état serré, par le dispositif de rigidification, de sorte que le bloc de serrage (7) et le levier de serrage (8) peuvent basculer dans le plan, qui est formé, à l'état serré, par le dispositif de rigidification, et, à l'état serré, agissent sur l'autre entretoise coudée.

2. Dispositif de serrage suivant la revendication 1, caractérisé par le fait que le levier de serrage (8) possède un coude (K) à proximité du bloc de serrage (7).

3. Dispositif de serrage suivant la revendication 1 ou 2, caractérisé par le fait qu'à l'état serré, le levier de serrage (8) est dirigé obliquement en direction du fond de l'armoire de commande (2).
